# EUROPEAN PATENT APPLICATION

(11) **EP 4 814 670 A1**
(43) Date of publication of application: **30.09.2026**
(21) Application number: 25201221.6
(22) Date of filing: 09.09.2025
(51) Int. Cl.: G06F 3/041

(54) **TRANSPARENT ANTENNA AND TOUCH SENSING DEVICE AND TRANSPARENT ANTENNA AND TOUCH DISPLAY DEVICE**

(30) Priority: 28.03.2025 TW 114112219
(71) Applicant: Posiflex Technology, Inc., New Taipei City 236 (TW)
(72) Inventor: HUANG, Po-Lin, 236 New Taipei City (TW)
(74) Representative: HGF

(57) **Abstract**

The present disclosure provides a transparent antenna and touch sensing device that includes an optical-grade protective cover, an antenna loop, a touch sensing layer and a transparent optical adhesive. The material of the antenna loop is a micron-level metal wire, and the visibility of the antenna loop is lower than a predetermined visibility. The transparent optical adhesive bonds the optical-grade protective cover plate and the touch sensing layer together, and the antenna loop is disposed between the optical-grade protective cover plate and the transparent optical adhesive.

## Description

### BACKGROUND

### Field of Invention

The present invention relates to electronic devices, and more particularly, transparent antenna and touch sensing devices and transparent antenna and touch display devices.

### Description of Related Art

As the technology of near field induction communication (NFC) is popularized and widely used and equipped in many electronic devices, the NFC induction coils in these electronic devices occupy a certain volume and are in the form of a non-transparent substrate. Therefore, the NFC antenna cannot be embedded in the touch interface, and cannot be effectively integrated with the touch screen. For current display devices, if NFC access function is required to exchange data and information, an additional reader device or an NFC antenna and its control board buried behind the screen or in the non-visible area of the screen must be used to operate. However, the following problems are also derived: increased signal blind spots, poor signal quality, increased device costs, and insufficient overall device aesthetics.

In view of the foregoing, there still exist some problems that await further improvement. However, those skilled in the art sought vainly for a solution. Accordingly, there is an urgent need in the related field to achieve the optimal integration of touch control and/or display and near-field sensing.

### SUMMARY

In one or more various aspects, the present disclosure is directed to transparent antenna, and touch sensing devices and transparent antenna and touch display devices, to solve the problems of the prior art.

Some embodiments of the present disclosure are related to a transparent antenna and touch sensing device that includes an optical-grade protective cover, an antenna coil, a touch sensing layer and a transparent optical adhesive. A first surface of the optical-grade protective cover has a window display area and an opaque decorative area, the opaque decorative area surrounds the window display area. A second surface of the optical-grade protective cover has a functional wiring area and an ink printing area, and the ink printing area surrounds the functional wiring area. A material of the antenna coil is a micron-level metal wire, a visibility of the antenna coil is lower than a predetermined visibility, two ends of the antenna coil are a signal output terminal and a signal receiving terminal and are connected to a flexible printed circuit board, the antenna coil is disposed on the functional wiring area of the second surface of the optical-grade protective cover, and the flexible printed circuit board is arranged in the ink printing area. The transparent optical adhesive bonds the optical-grade protective cover and the touch sensing layer together, where the antenna coil is disposed between the second surface of the optical-grade protective cover and the transparent optical adhesive.

In some embodiments of the present disclosure, the optical-grade protective cover is an optical-grade transparent glass or a poly methyl methacrylate.

In some embodiments of the present disclosure, the antenna coil is bent as an independent antenna coil made out of one piece.

In some embodiments of the present disclosure, the antenna coil includes a plurality of parallel antenna coils formed by bending multiple wires in parallel, and each of the parallel antenna coils is made out of one piece.

In some embodiments of the present disclosure, the transparent optical adhesive fixedly bonds the antenna coil to the functional wiring area of the second surface of the optical-grade protective cover.

In some embodiments of the present disclosure, the touch sensing layer is a double-sided indium tin oxide (DITO) touch sensing substrate or a single-sided indium tin oxide (SITO) touch sensing substrate, and a conductive material of the touch sensing layer comprises indium tin oxide, nanosilver and a metal mesh.

Some embodiments of the present disclosure are related to a transparent antenna and touch display device that includes an optical-grade protective cover, an antenna coil, a touch sensing layer, a transparent optical adhesive and a display panel. A first surface of the optical-grade protective cover has a window display area and an opaque decorative area, and the opaque decorative area surrounds the window display area. A second surface of the optical-grade protective cover has a functional wiring area and an ink printing area, and the ink printing area surrounds the functional wiring area. A material of the antenna coil is a micron-level metal wire, a visibility of the antenna coil is lower than a predetermined visibility, two ends of the antenna coil are a signal output terminal and a signal receiving terminal and are connected to a flexible printed circuit board, the antenna coil is disposed on the functional wiring area of the second surface of the optical-grade protective cover, and the flexible printed circuit board is arranged in the ink printing area. The transparent optical adhesive bonds the optical-grade protective cover and the touch sensing layer together, where the antenna coil is disposed between the second surface of the optical-grade protective cover and the transparent optical adhesive. The touch sensing layer is disposed between the optical-grade protective cover and the display panel.

In some embodiments of the present disclosure, the optical-grade protective cover is an optical-grade transparent glass or a poly methyl methacrylate.

In some embodiments of the present disclosure, the antenna coil is bent as an independent antenna coil made out of one piece.

In some embodiments of the present disclosure, the antenna coil comprises a plurality of parallel antenna coils formed by bending multiple wires in parallel, and each of the parallel antenna coils is made out of one piece.

In some embodiments of the present disclosure, the transparent optical adhesive fixedly bonds the antenna coil to the functional wiring area of the second surface of the optical-grade protective cover.

In some embodiments of the present disclosure, the touch sensing layer is a double-sided indium tin oxide touch sensing substrate or a single-sided indium tin oxide touch sensing substrate.

In some embodiments of the present disclosure, a conductive material of the touch sensing layer comprises indium tin oxide, nanosilver and a metal grid.

In some embodiments of the present disclosure, the display panel is directly bonded to the touch sensing layer through another transparent optical adhesive.

In some embodiments of the present disclosure, a frame of the display panel is bonded to the touch sensing layer through a double-sided adhesive.

Technical advantages generally achieve by embodiments of the present disclosure. The transparent antenna and touch sensing device and the transparent antenna and touch display device of the present disclosure achieve an optimized integration of touch control and/or display and near-field sensing, thereby reducing signal blind areas, improving signal quality, reducing device costs, and reducing the space of the overall device.

Many of the attendant features will be more readily appreciated, as the same becomes better understood by reference to the following detailed description considered in connection with the accompanying drawings.

### BRIEF DESCRIPTION OF THE DRAWINGS

The invention can be more fully understood by reading the following detailed description of the embodiment, with reference made to the accompanying drawings as follows:
Fig. 1 is an exploded view of a transparent antenna and touch sensing device and a transparent antenna and touch display device according to some embodiments of the present disclosure;
Fig. 2 is a cross-sectional view of the transparent antenna and touch sensing device and the transparent antenna and touch display device according to some embodiments of the present disclosure;
Fig. 3A is a front view of a first surface of an optical-grade protective cover according to some embodiments of the present disclosure;
Fig. 3B is a front view of a second surface of an optical-grade protective cover according to some embodiments of the present disclosure;
Fig. 4A is a schematic diagram of a single antenna coil according to some embodiments of the present disclosure;
Fig. 4B is a schematic diagram of a plurality of antenna coils according to some embodiments of the present disclosure;
Fig. 5A is a schematic diagram of an independent antenna coil according to some embodiments of the present disclosure;
Fig. 5B is a partial enlarged view of the circled portion in Fig. 5A;
Fig. 6A is a schematic diagram of parallel antenna coils according to some embodiments of the present disclosure; and
Fig. 6B is a partial enlarged view of the circled area in Fig. 6A.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

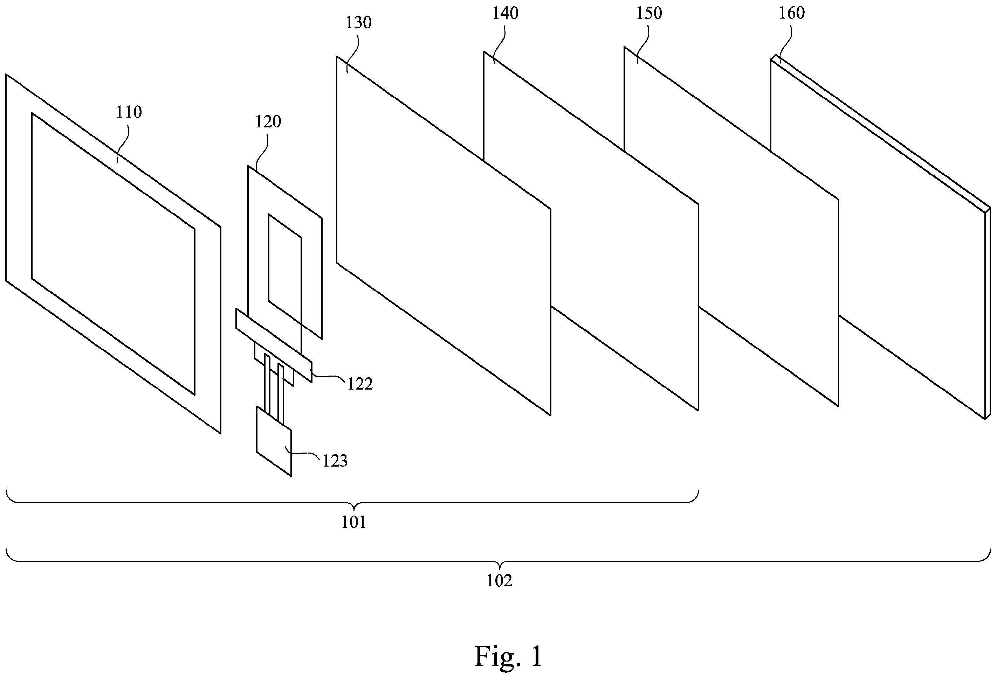

Fig. 1 is an exploded view of a transparent antenna and touch sensing device 101 and a transparent antenna and touch display device 102 according to some embodiments of the present disclosure. As shown in Fig. 1, the transparent antenna and touch sensing device 101 includes an optical-grade protective cover 110, an antenna coil 120, a touch sensing layer 140, and a transparent optical adhesive 130. The material of the antenna coil 120 is a micron-level metal wire, and the visibility of the antenna coil 120 is lower than the predetermined visibility (e.g., naked eye visibility measured in experimental data). The transparent optical adhesive 130 bonds the optical-grade protective cover 110 and the touch sensing layer 140 together, and the antenna coil 120 is disposed between an optical-grade protective cover 110 and a transparent optical adhesive 130.

In structure, the antenna coil 120 is electrically connected to the flexible printed circuit board 122, and the flexible printed circuit board 122 is electrically connected to the control board 123.

In some embodiments of the present disclosure, the optical-grade protective cover 110 is an optical-grade transparent glass or a poly methyl methacrylate (PMMA), so that the optical-grade protective cover 110 has the characteristics of being scratch-resistant, impact-resistant, and drop-resistant. In addition, the optical-grade protective cover 110 also serves as a protective cover for the touch sensing layer 140.

In some embodiments of the present disclosure, the touch sensing layer 140 is a double-sided indium tin oxide (DITO) touch sensing substrate or a single-sided indium tin oxide (SITO) touch sensing substrate, and the conductive material of the touch sensing layer 140 includes indium tin oxide, nanosilver and a metal grid. For example, the driving circuit and the receiving circuit of the touch sensing layer 140 are arranged on two sides of the sensing layer respectively, or are arranged on the same plane. The receiving layer and the sensing layer are connected to a flexible touch board through metal leads arranged outside the window active area, so that it has a touch sensing function.

On the other hand, as shown in Fig. 1, the transparent antenna and touch display device 102 includes the optical-grade protective cover 110, the antenna coil 120, the touch sensing layer 140, the transparent optical adhesive 130 and a display panel 160 . The material of the antenna coil 120 is the micron-level metal wire, and the visibility of the antenna coil 120 is lower than the predetermined visibility. The transparent optical adhesive 130 bonds the optical-grade protective cover 110 and the touch sensing layer 140 together, and the antenna coil 120 is disposed between the optical-grade protective cover 110 and the transparent optical adhesive 130. The touch sensing layer 140 is disposed between the optical-grade protective cover 110 and the display panel 160.

In some embodiments of the present disclosure, the display panel 160 is directly bonded to the touch sensing layer 140 through another transparent optical adhesive 150, or a frame of the display panel is bonded to the touch sensing layer 140 through a double-sided adhesive. For example, the display panel 160 may be a thin film transistor liquid crystal display or an organic light emitting diode display panel.

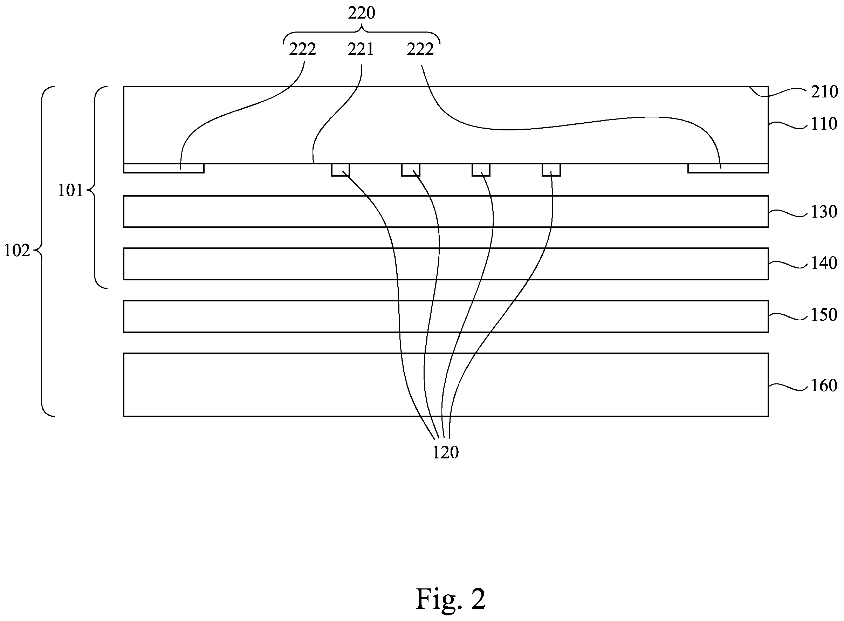

Fig. 2 is a cross-sectional view of the transparent antenna and touch sensing device 101 and the transparent antenna and touch display device 102 according to some embodiments of the present disclosure. As shown in Fig. 2, the optical-grade protective cover 110 includes a first surface 210 and a second surface 220. The second surface 220 of the optical-grade protective cover 110 has a functional wiring area 221 and an ink printing area 222. The ink printing area 222 surrounds the functional wiring area 221. The antenna coil 120 is disposed on the functional wiring area 221 of the second surface 220 of the optical-grade protective cover 110.

In some embodiments of the present disclosure, the transparent optical adhesive 130 fixedly bonds the antenna coil 120 to the functional wiring area 221 of the second surface 220 of the optical-grade protective cover 110, thereby protecting the quality of the antenna coil 120 from wear and oxidation. For example, the transparent optical adhesive 130 has the characteristics of high transparency, high penetration, high adhesion and high insulation.

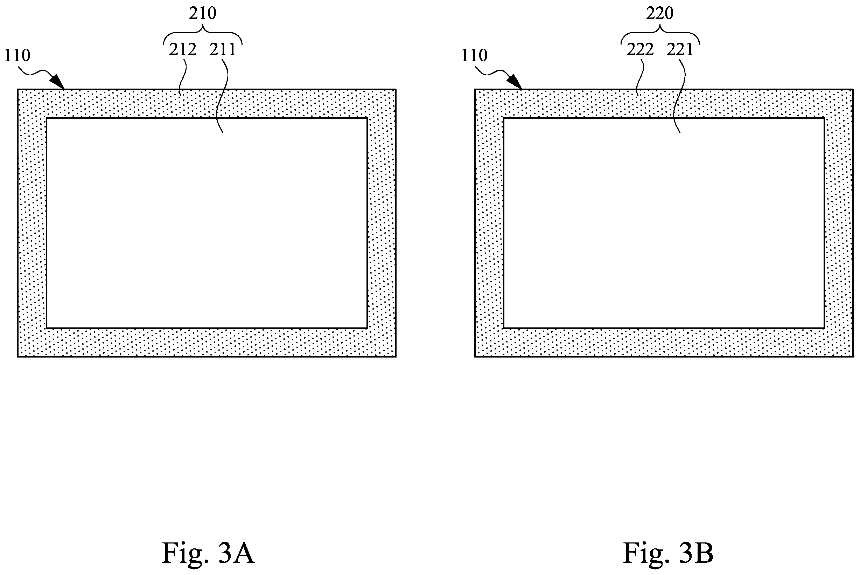

Fig. 3A is a front view of the first surface 210 of the optical-grade protective cover 110 according to some embodiments of the present disclosure. As shown in Fig. 3A, the first surface 210 of the optical-grade protective cover 110 has a window display area 211 and an opaque decorative area 212. The opaque decorative area 212 surrounds the window display area 211.

Fig. 3B is a front view of the second surface 220 of the optical-grade protective cover 110 according to some embodiments of the present disclosure. As shown in Fig. 3B, the second surface 220 of the optical-grade protective cover 110 has a functional wiring area 221 and an ink printing area 222, and the ink printing area 222 surrounds the functional wiring area 221. For example, the functional wiring area 221 of Fig. 3B corresponds to the window display area 211 of Fig. 3A in position, and the ink printing area 222 of Fig. 3B corresponds to the opaque decorative area 212 of Fig. 3A in position.

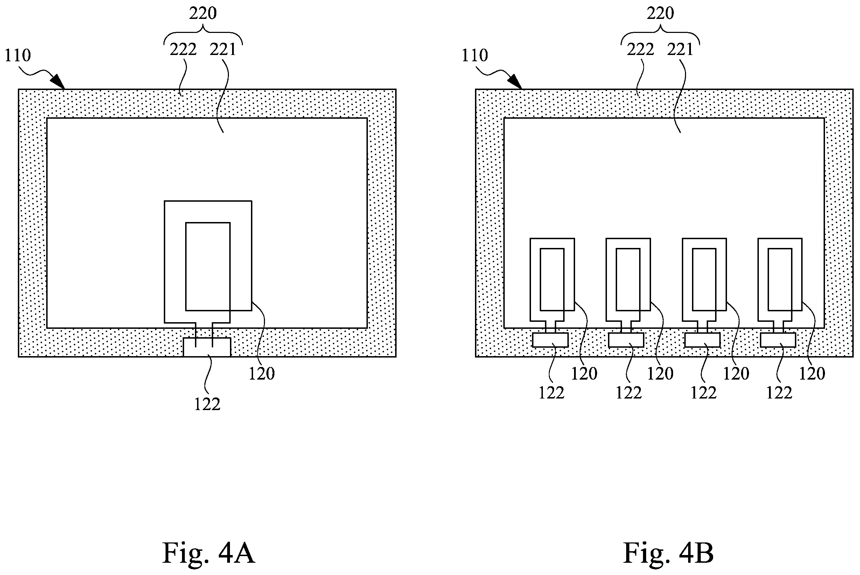

Fig. 4A is a schematic diagram of a single antenna coil 120 according to some embodiments of the present disclosure. As shown in Fig. 4A, two ends of the antenna coil 120 are the signal output terminal and the signal receiving terminal and are connected to the flexible printed circuit board 122. The flexible printed circuit board 122 is disposed on the ink printing area 222.

Fig. 4B is a schematic diagram of a plurality of antenna coils 120 according to some embodiments of the present disclosure. As shown in Fig. 4B , two ends of each antenna coil 120 are the signal output terminal and the signal receiving terminal and are connected to a respective one of the flexible printed circuit boards 122 . The flexible printed circuit boards 122 are disposed on the ink printing area 222.

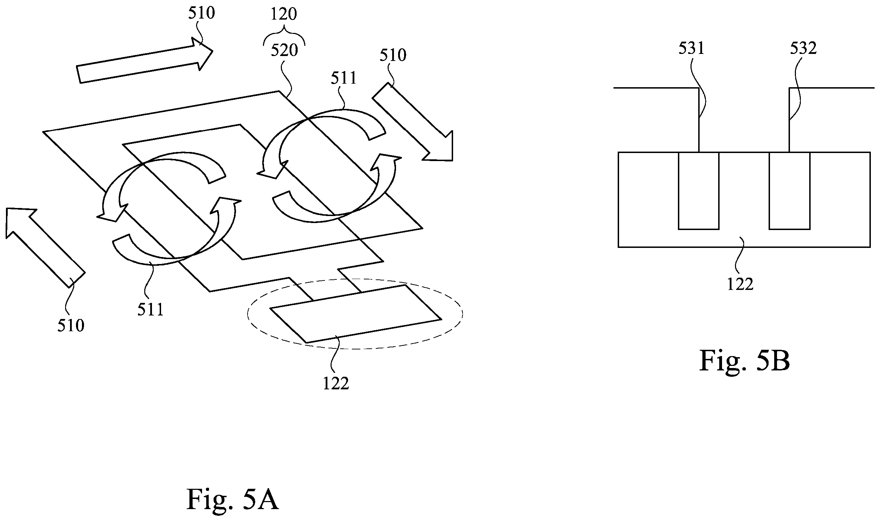

Fig. 5A is a schematic diagram of an independent antenna coil 520 according to some embodiments of the present disclosure, and Fig. 5B is a partial enlarged view of the circled area in Fig. 5A. As shown in Fig. 5A and Fig.5B, the two ends of the antenna coil 120 are a signal output terminal 532 and a signal receiving terminal 531 and are connected to the flexible printed circuit board 122. The antenna coil 120 is bent as the independent antenna coil 520 made out of one piece.

For example, the optical-grade protective cover 110 is embedded in the independent antenna coil 520 with the micron-level and low-visibility. The independent antenna coil 520 is a ring-shaped, rectangular or polygonal coil with at least one turn, or can be a special-shaped coil according to needs. The coil is connected to the lead of the flexible printed circuit board 122 to form a loop coil. One end of the flexible printed circuit board 122 is connected to one end of the independent antenna coil 520, this one end of the independent antenna coil 520 can be regarded as the signal output terminal 532, and the other end of the independent antenna coil 520 can be regarded as the signal receiving terminal 531. The two ends of the flexible printed circuit board 122 are then connected to the control board, so that it has an effective loop coil. After the electric current 510 is introduced, the magnetic field 511 is generated around the circuit, and it has a near-field sensing function. In addition, coil size, inductance, and quality factor (Q value) affect the quality of near-field induction. The optical-grade protective cover 110 and antenna coil 120 with the low-visibility are collectively referred to as a novel antenna.

For example, when the electric current 510 is introduced through the flexible printed circuit board 122, the independent antenna coil 520 generates the magnetic field effect due to the electric current 510. At the operating frequency of 13.56MHZ, the near field induction communication tag (NFC TAG) can access and receive data, and its maximum sensing distance can reach 10 cm and the transmission rate is 424 bits/S.

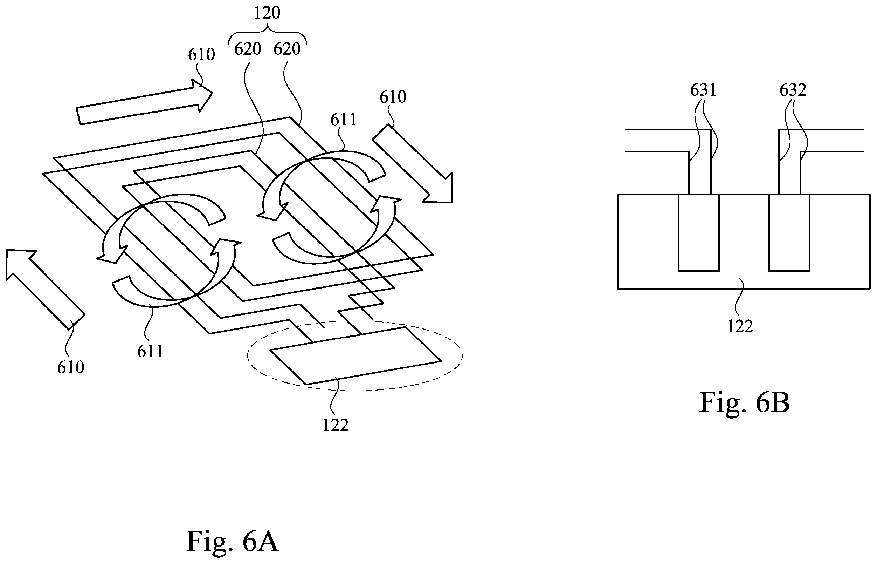

Fig. 6A is a schematic diagram of parallel antenna coils 620 according to an embodiment of the present disclosure, and Fig. 6B is a partial enlarged view of the circled portion in Fig. 6A. As shown in Fig. 6A and Fig. 6B, two ends of each of the antenna coils 120 are a signal output terminal 632 and a signal receiving terminal 631 and are connected to the flexible printed circuit board 122. The antenna coil 120 includes a plurality of parallel antenna coils 620 formed by bending multiple wires in parallel, and each of the parallel antenna coils 620 is made out of one piece.

For example, in order to enhance the quality of near field communication, two or more identical and parallel micron-sized and low-visibility parallel antenna coils 620 can be embedded on the same plane of the optical-grade protective cover 110 through parallel connection technology. Each of the parallel antenna coils 620 is a ring-shaped, rectangular, or polygonal coil with at least one turn, or can be a special-shaped coil, or can be a special-shaped coil according to needs. This coil is connected to the lead of the flexible printed circuit board 122 to form a loop coil. One end of the flexible printed circuit board 122 is connected to one end of each metal line, which can be regarded as the signal output terminal 632, and the other end is regarded as the signal receiving terminal 631. The two ends of the flexible printed circuit board 122 are then connected to the control board, so that it has an effective loop coil. After the electric current 610 is introduced, the magnetic field 611 of near-field induction is generated. In addition, coil size, inductance, and quality factor (Q value) can affect the quality of near-field induction. The optical-grade protective cover 110 and the antenna coil 120 with the low-visibility are collectively referred to as a novel antenna.

In practice, for example, the present disclosure uses the optical-grade protective cover 110 as the main body and the micron-sized antenna coil 120 to design and develop a new type of low-visibility NFC coil and introduce it into the transparent antenna and touch display device 102. This design can materialize the low-visibility antenna coil 120 and embed it into the window display area 211 of the transparent antenna and touch display device 102 through processing, so that the transparent antenna and touch display device 102 has a sensing function in addition to a touch function. This design can not only reduce the thickness of the entire transparent antenna and touch display device 102 and the black frame area of the screen (such as the ink printing area 222) towards a light and simple narrow frame design, but also reduce the overall device cost. In terms of the quality of the sensing signal, due to the superior position of the NFC antenna, the overall signal quality is further improved and the problem of signal blind spots is solved.

Technical advantages generally achieve by embodiments of the present disclosure. The transparent antenna and touch sensing device 101 and the transparent antenna and touch display device 102 of the present disclosure achieve an optimized integration of touch control and/or display and near-field sensing, thereby reducing signal blind areas, improving signal quality, reducing device costs, and reducing the space of the overall device.

## Claims

1. A transparent antenna and touch sensing device (101), comprising:
an optical-grade protective cover (110), wherein a first surface (210) of the optical-grade protective cover (110) has a window display area (211) and an opaque decorative area (212), the opaque decorative area (212) surrounds the window display area (211), a second surface (220) of the optical-grade protective cover (110) has a functional wiring area (221) and an ink printing area (222), and the ink printing area (222) surrounds the functional wiring area (221);
an antenna coil (120), wherein a material of the antenna coil (120) is a micron-level metal wire, a visibility of the antenna coil (120) is lower than a predetermined visibility, two ends of the antenna coil (120) are a signal output terminal (531, 631) and a signal receiving terminal (532, 632) and are connected to a flexible printed circuit board (122), the antenna coil (120) is disposed on the functional wiring area (221) of the second surface (220) of the optical-grade protective cover (110), and the flexible printed circuit board (122) is arranged in the ink printing area (222);
a touch sensing layer (140); and
a transparent optical adhesive (130) bonding the optical-grade protective cover (110) and the touch sensing layer (140) together, wherein the antenna coil (120) is disposed between the second surface (220) of the optical-grade protective cover (110) and the transparent optical adhesive (130).

2. The transparent antenna and touch sensing device (101) of claim 1, wherein the optical-grade protective cover (110) is an optical-grade transparent glass or a poly methyl methacrylate.

3. The transparent antenna and touch sensing device (101) of claim 1 or 2, wherein the antenna coil (120) is bent as an independent antenna coil (520) made out of one piece.

4. The transparent antenna and touch sensing device (101) of any of the claims 1 to 3, wherein the antenna coil (120) comprises a plurality of parallel antenna coils (620) formed by bending multiple wires in parallel, and each of the parallel antenna coils (620) is made out of one piece.

5. The transparent antenna and touch sensing device (101) of any of the claims 1 to 4, wherein the transparent optical adhesive (130) fixedly bonds the antenna coil (120) to the functional wiring area (221) of the second surface (220) of the optical-grade protective cover (110).

6. The transparent antenna and touch sensing device (101) of any of the claims 1 to 5, wherein the touch sensing layer (140) is a double-sided indium tin oxide (DITO) touch sensing substrate or a single-sided indium tin oxide (SITO) touch sensing substrate, and a conductive material of the touch sensing layer (140) comprises indium tin oxide, nanosilver and a metal mesh.

7. A transparent antenna and touch display device (102), comprising:
an optical-grade protective cover (110), wherein a first surface (210) of the optical-grade protective cover (110) has a window display area (211) and an opaque decorative area (212), the opaque decorative area (212) surrounds the window display area (211), a second surface (220) of the optical-grade protective cover (110) has a functional wiring area (221) and an ink printing area (222), and the ink printing area (222) surrounds the functional wiring area (221);
an antenna coil (120), wherein a material of the antenna coil (120) is a micron-level metal wire, a visibility of the antenna coil (120) is lower than a predetermined visibility, two ends of the antenna coil (120) are a signal output terminal (531, 631) and a signal receiving terminal (532, 632) and are connected to a flexible printed circuit board (122), the antenna coil (120) is disposed on the functional wiring area (221) of the second surface (220) of the optical-grade protective cover (110), and the flexible printed circuit board (122) is arranged in the ink printing area (222);
a touch sensing layer (140);
a transparent optical adhesive (130) bonding the optical-grade protective cover (110) and the touch sensing layer (140) together, wherein the antenna coil (120) is disposed between the second surface (220) of the optical-grade protective cover (110) and the transparent optical adhesive (130); and
a display panel (160), wherein the touch sensing layer (140) is disposed between the optical-grade protective cover (110) and the display panel (160).

8. The transparent antenna and touch display device (102) of claim 7, wherein the optical-grade protective cover (110) is an optical-grade transparent glass or a poly methyl methacrylate.

9. The transparent antenna and touch display device (102) of claim 7 or 8, wherein the antenna coil (120) is bent as an independent antenna coil (520) made out of one piece.

10. The transparent antenna and touch display device (102) of any of the claims 7 to 9, wherein the antenna coil (120) comprises a plurality of parallel antenna coils (620) formed by bending multiple wires in parallel, and each of the parallel antenna coils (620) is made out of one piece.

11. The transparent antenna and touch display device (102) of any of the claims 7 to 10, wherein the transparent optical adhesive (130) fixedly bonds the antenna coil (120) to the functional wiring area (221) of the second surface (220) of the optical-grade protective cover (110).

12. The transparent antenna and touch display device (102) of any of the claims 7 to 11, wherein the touch sensing layer (140) is a double-sided indium tin oxide touch sensing substrate or a single-sided indium tin oxide touch sensing substrate.

13. The transparent antenna and touch display device (102) of claim 12, wherein a conductive material of the touch sensing layer (140) comprises indium tin oxide, nanosilver and a metal grid.

14. The transparent antenna and touch display device (102) of any of the claims 7 to 13, wherein the display panel (160) is directly bonded to the touch sensing layer (140) through another transparent optical adhesive (150).

15. The transparent antenna and touch display device (102) of any of the claims 7 to 14, wherein a frame of the display panel (160) is bonded to the touch sensing layer (140) through a double-sided adhesive.
